# FASCICULE DE BREVET EUROPEEN

(11) **EP 3 359 419 B1**
(45) Date de publication et mention de la délivrance du brevet: **25.03.2020**
(21) Numéro de dépôt: 16793942.0
(22) Date de dépôt: 05.10.2016
(51) Int. Cl.: B60Q 1/00, B60Q 1/26, F21S 8/00, F21V 8/00

(54) **ECRAN DE DIFFUSION TRANSPARENT ET FEU DE VÉHICULE METTANT EN OEUVRE CET ECRAN DE DIFFUSION**
TRANSPARENTER DIFFUSIONSSCHIRM UND FAHRZEUGBELEUCHTUNG MIT DIESEM DIFFUSIONSSCHIRM
TRANSPARENT DIFFUSION SCREEN AND VEHICLE LIGHT USING THIS DIFFUSION SCREEN

(30) Priorité: 05.10.2015 FR 1570049
(43) Date de publication de la demande: 15.08.2018
(73) Titulaire: Marelli Automotive Lighting France, 89330 Saint-Julien-du-Sault (FR)
(72) Inventeur: BUISSON, Alain, 78190 Trappes (FR)
(74) Mandataire: Jacobacci Coralis Harle
(86) Numéro de dépôt international: PCT/FR2016/052564
(87) Numéro de publication internationale: WO 2017/060625

(56) Documents cités:
- EP-A1- 1 835 224
- US-A1- 2009 225 562
- US-A1- 2013 294 064

## Description

La présente invention concerne le domaine de l'éclairage et, dans une application préférée, mais non exclusive, le domaine des feux de signalisation, avant ou arrière, de véhicule notamment de véhicule automobile.

Dans le domaine d'application préféré, il est connu, notamment d'un brevet FR 2 898 660, un feu de véhicule, notamment arrière, comprenant au moins une première source de lumière adaptée pour émettre un faisceau lumineux au travers d'un écran de diffusion transparent. Selon ce document l'écran de diffusion est constitué d'une lame réalisée en matériau transparent pour former un guide de lumière avec d'une part une face interne orientée vers l'intérieur du feu et la première source de lumière, et d'autre part, une face externe, opposée à la face interne, orientée vers l'extérieur du feu pour être visible par un observateur éventuel. L'écran de diffusion comprend alors au moins une zone latérale d'entrée de la lumière qui est destinée à être placée en relation avec au moins une source de lumière latérale et qui est configurée pour diriger la lumière issue de la source de lumière latérale à l'intérieur ou dans l'épaisseur de la lame. Afin d'assurer la diffusion, vers la face externe, de la lumière en provenance de la source latérale. La face interne de la lame comprend alors, dans une zone de diffusion, des cavités en partie au moins coniques qui sont réparties sur la zone de diffusion et présentent une profondeur inférieure à épaisseur de la lame de diffusion et pour la partie conique un angle au sommet inférieur ou égal à 90°. L'écran de diffusion est en outre adapté pour transmettre la lumière issue de la première source. Selon ce document, l'écran de diffusion permet d'obtenir une homogénéité de la lumière issue de la première source ainsi que de la lumière réfléchie par un réflecteur situé en regard de la face interne de l'écran. Cependant, la répartition et la dimension des cavités coniques selon ce document sont telles que la zone de diffusion présente un aspect laiteux ou grainé qui nuit à l'esthétique générale du feu de signalisation tant allumé qu'éteint.

Il est donc apparu le besoin d'un nouveau type d'écran diffusant ou de diffusion qui présente une transparence ou un aspect esthétique dépourvu de l'aspect laiteux selon l'art antérieur et voire présente un aspect cristal tout en offrant de meilleures performances tant en transmission de la lumière de la première source qu'en diffusion de la lumière de la source latérale par la zone de diffusion.

Afin d'atteindre cet objectif, l'invention concerne un écran de diffusion transparent constitué d'une lame réalisée en matériau transparent pour former un guide de lumière avec une face interne et une face externe, opposée à la face interne, orientée vers l'extérieur pour être visible par un observateur éventuel et au moins une zone latérale d'entrée de la lumière qui est destinée à être placée en relation avec au moins une source de lumière latérale et qui est configurée pour diriger la lumière issue de la source de lumière à l'intérieur ou dans l'épaisseur de la lame, la face interne de la lame comprenant dans une zone de diffusion des cavités, en partie au moins coniques, qui sont réparties sur la zone de diffusion et présentent une profondeur inférieure à l'épaisseur de la lame dans la zone de diffusion et, pour la partie conique, un angle au sommet inférieur ou égal à 90°, l'écran transparent étant en outre adapté pour transmettre la lumière incidente.

Selon l'invention l'écran de diffusion est caractérisé en ce que la lame présente une épaisseur comprise entre 1 mm et 8 mm et en ce que les dimensions des cavités sont choisies de manière que la lame étant éclairée par un faisceau incident normal à sa face interne, les cavités ne sont pas visibles individuellement par un observateur ayant une acuité visuelle de 10/10, observant la face externe de la lame selon une direction normale à cette dernière et étant situé à une distance supérieure ou égale à 50 cm. Par les termes « acuité visuelle de 10/10 », on entend que les cavités ne sont pas visibles pour un observateur situé à une distance supérieure ou égale à 50 cm de la face externe de la lame, selon une direction normale à cette dernière, dont au moins un œil n'est pas capable de distinguer deux points formant un angle apparent avec l'œil, égal ou inférieur à 1 mm d'arc ou 1/60^{ème} de degré.

Le feu selon l'invention présente l'avantage de préserver l'efficacité photométrique de la première source de lumière dont le faisceau lumineux n'est pas ou peu perturbé ou affecté par sa traversée de l'écran de diffusion. De plus, l'écran de diffusion n'affecte pas du fait de sa transparence la vision des éléments du feu situés dernière l'écran de diffusion du côté de sa face interne. Par ailleurs et de manière particulièrement surprenante, l'écran de lumière permet malgré sa transparence de diffuser vers l'extérieur du feu et au niveau de la zone de diffusion une grande partie de la lumière issue de la source latérale de sorte que cette dernière est en mesure d'assurer une fonction de signalisation ou d'éclairage conformes aux exigences normatives.

Il doit, de plus, être souligné que l'écran de diffusion permet d'obtenir un effet surprenant pour l'observateur dans la mesure où avant l'allumage de la source latérale, il ne perçoit pas la présence de l'écran de diffusion et après allumage de la source latérale, il voit seulement ou principalement la zone de diffusion de l'écran sans percevoir l'origine latérale de la lumière.

Selon l'invention, la base de chaque cavité conique possède une forme sensiblement elliptique avec un grand axe, mesuré au niveau de la face de lame correspondante, possédant une longueur inférieure ou égale à 0,12 mm. Une telle dimension de la base des cavités coniques permet de les rendre imperceptibles par un observateur situé du côté de la face externe notamment lorsqu'aucune source de lumière n'est allumée du côté de la face interne. De manière préférée, la longueur du grand axe possède une longueur comprise entre 0,03 mm et 0,12 mm.

Selon une variante de cette caractéristique, le taux de couverture des cavités coniques dans la zone de diffusion, à savoir le rapport entre la somme des surfaces des bases des cavités coniques et la surface totale de la zone de diffusion, est inférieur ou égal à 0,21 et de préférence compris entre 0,03 et 0,21. Il a été déterminé dans le cadre de l'invention que de telles valeurs du taux de couverture permet de façon tout à fait surprenante d'atteindre un excellent rendement de diffusion de la lumière issue de la source latérale sans affecter substantiellement la transmission de la lumière issue des sources situées en arrière ou derrière l'écran de diffusion.

Selon une caractéristique de l'invention, la distance minimale entre deux cavités voisines est supérieure ou égale à 0,18 mm.

Selon une autre caractéristique de l'invention, la distance minimale entre deux cavités voisines est comprise entre 0,2 mm et 0,8 mm.

Selon encore une autre caractéristique de l'invention, les cavités sont disposées selon des rangées sensiblement parallèles.

Selon une variante de cette caractéristique, le pas, entre deux cavités voisines d'une même rangée, est compris entre 0,2 mm et 0,8 mm.

Selon une autre variante de cette caractéristique, la distance entre deux rangées voisines est comprise entre 0,14 mm et 0,8 mm
Selon encore une autre variante de cette caractéristique, les cavités sont disposées en quinconce de manière à être décalées d'une rangée sur l'autre.

Dans de cadre de cette variante et selon une forme, préférée, mais non exclusive, de réalisation, la distance entre deux rangées voisines est comprise entre 0,14 mm et 0,8 mm et, de manière préférée, entre 0,14 mm et 0,57 mm.

Selon une caractéristique de l'invention, les cavités sont disposées selon des rangées et des colonnes à angle droit, la direction des colonnes ou des rangées faisant un angle compris entre 40° et 50° et, de préférence, de l'ordre de 45° avec une direction d'extension de la zone latérale d'entrée de la lumière. Selon cette caractéristique les cavités sont disposées aux intersections de lignes virtuelles orthogonales formant un quadrillage virtuel de la face interne dans la zone de diffusion et passant par les centres des cavités.

Selon une variante de cette caractéristique, la distance entre deux colonnes voisines est comprise entre 0,2 mm et 0,8 mm.

Selon une caractéristique de l'invention, la distance entre deux rangées voisines diminue au fur et à mesure que les rangées sont éloignées de la zone latérale d'entrée de la lumière. Il doit être noté que la loi de variation de la distance entre deux rangées voisines n'est pas nécessairement linaire.

Selon une autre caractéristique de l'invention, le pas entre deux cavités voisines d'une même rangée diminue au fur et à mesure que les rangées sont éloignées de la zone latérale d'entrée de la lumière. Il doit être noté que la loi de variation du pas n'est pas nécessairement linaire.

Selon une caractéristique de l'invention, la densité surfacique des cavités augmente au fur et à mesure de l'éloignement de la zone latérale d'entrée de la lumière. Il doit être noté que la loi de variation de la densité n'est pas nécessairement linaire.

Selon une caractéristique de l'invention, la densité surfacique des cavités est comprise entre 200 cavités par cm² et 2500 cavités par cm². De manière surprenante, l'invention permet de conserver la transparence de l'écran même avec une densité de 2500 cavités par cm².

Selon une autre caractéristique de l'invention, le plus petit angle entre la paroi conique d'une cavité et la surface adjacente de la face interne est compris entre 2° et 4°. La mise en œuvre de telle valeur d'angle permet de garantir un bon démoulage de la lame lors de sa fabrication.

Selon encore une autre caractéristique de l'invention, les faces interne et externe de l'écran de diffusion ou de la lame qui le constitue sont en partie au moins gauches.

Selon une caractéristique de l'invention, l'écran de diffusion comprend des cavités coniques aménagées dans une première zone de diffusion sur la face interne et des cavités coniques aménagée dans une deuxième zone de diffusion sur la face externe de l'écran. Selon l'invention les première et deuxième zones de diffusion, respectivement zone de diffusion interne et zone de diffusion externe, peuvent être situées totalement ou partiellement en regard l'une de l'autre ou encore n'avoir aucune zone de recouvrement. De même, les zones de diffusion interne et externe peuvent présenter un même motif ou une même forme ou au contraire posséder des formes différentes.

Selon un mode préféré de réalisation de l'invention, l'écran de diffusion est obtenu par moulage sous pression dans un moule dont l'empreinte correspondant à la partie de la face interne comprend des conformations convexes en partie au moins coniques destinées à former les cavités coniques.

L'invention concerne également un feu de véhicule, notamment arrière, comprenant au moins un écran de diffusion transparent selon l'invention et une source latérale de lumière qui est associée à l'entrée latérale de l'écran de diffusion et qui est adaptée pour émettre un faisceau lumineux dans l'épaisseur de l'écran de diffusion.

Selon une caractéristique de l'invention, le feu de véhicule, comprend au moins une source de lumière située du côté de la face interne de l'écran de diffusion et adaptée pour émettre un faisceau lumineux au travers l'écran de diffusion.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative de réalisation d'un feu de véhicule conforme à l'invention.
- La figure 1 est une vue schématique d'un feu de signalisation conforme à l'invention.
- La figure 2 est une élévation de l'écran de diffusion constitutif du feu, illustré à la figure 1, vu depuis sa face interne.
- La figure 3 est une section transversale schématique partielle d'un écran de diffusion constitutif du feu illustré à la figure 1.
- La figure 4 est une élévation en vue de gauche de la section illustrée figure 3.
- La figure 5 est une élévation analogue à la figure 2 d'une autre forme de réalisation d'un écran de diffusion selon l'invention.
- La figure 6 est une élévation analogue à la figure 2 d'encore une autre forme de réalisation d'un écran de diffusion selon l'invention vu depuis sa face interne.
- La figure 7 est une élévation de la forme de réalisation de l'écran de diffusion selon la figure 6 vu depuis sa face externe.
Il est à noter que sur ces figures les éléments structurels et/ou fonctionnels communs aux différentes variantes peuvent présenter les mêmes références.

Un feu de véhicule selon l'invention tel que désigné dans son ensemble par la référence F est destiné à être adapté sur un véhicule de manière pouvoir émettre un faisceau lumineux vers l'extérieur E du véhicule. Dans une application préférée, mais non exclusive, le feu selon l'invention est destiné à être situé à l'arrière du véhicule de manière à émettre au moins un signal lumineux ou un faisceau de lumière visible par un observateur extérieur O pour notamment remplir au moins une fonction de signalisation ou d'éclairage telle que lanterne, feu de position ou arrière, feu stop, feu arrière de brouillard, indicateur de changement de direction, feu de recul, éclairage décoratif sans que cette liste ne soit exhaustive ou limitative .

Ainsi, le feu F comprend au moins une première source de lumière 1 adaptée pour émettre un faisceau lumineux vers l'extérieur du véhicule en direction de l'observateur O. Selon l'exemple illustré, le feu F comprend une deuxième source de lumière 3 également adaptée pour émettre un faisceau lumineux 4 vers l'extérieur du véhicule. Les première et deuxième sources de lumière peuvent ainsi assurer chacune une fonction de signalisation ou d'éclairage distincte.

Selon l'invention, le feu F comprend également un écran de diffusion 10 qui est situé entre les première et deuxième sources de lumière 1 et 3 et l'extérieur du véhicule. L'écran de diffusion 10 est alors conçu pour assurer la transmission des faisceaux lumineux 2 et 4 issue des première et deuxième sources de lumière sans quasiment en altérer l'intensité. L'écran de diffusion 10 est également conçu pour assurer la diffusion vers l'extérieur E de la lumière issue d'une source latérale 11 non directement visible par l'observateur O depuis l'extérieur du véhicule. La source latérale et l'écran de diffusion associé peuvent alors remplir une troisième fonction de signalisation ou d'éclairage ou encore une fonction d'illumination décorative.

À cet effet, l'écran de diffusion 10 est constitué d'une lame réalisée en matériau transparent tel qu'une matière plastique comme du polycarbonate ou encore du polyméthacrylate de méthyle. L'écran de diffusion 10 peut alors être incolore ou présenter une couleur uniforme ou encore des zones de couleurs différentes. De manière préférée et afin d'absorber le moins possible de lumière, l'écran de diffusion est incolore ou selon la terminologie en vigueur cristal ou de "couleur" cristal.

L'écran de diffusion comprend une face interne Fi orientée vers l'intérieur du feu et les première et deuxième sources de lumière 1,3 et, à l'opposé de la face interne Fi, une face externe Fe orientée vers l'extérieur du véhicule et visible par un observateur O. L'écran 10 peut présenter différentes formes de sorte que sa face interne Fi et sa face externe Fe peuvent être en partie ou totalement gauches, sachant que les faces interne et externe peuvent être également en partie au moins plane et/ou développables.

L'écran de diffusion 10 forme un guide de lumière avec une zone latérale 12 d'entrée de la lumière issue de la source latérale 11 placée en relation avec ladite zone latérale d'entrée 12. La zone latérale d'entrée est alors configurée pour diriger la lumière issue de la source latérale à l'intérieur ou dans l'épaisseur de l'écran de diffusion 10. Selon l'exemple illustré, la zone latérale d'entrée 12 est située sur une face latérale orthogonale aux faces internes Fi et externe Fe de l'écran de diffusion 10. Toutefois, selon l'invention, la zone latérale d'entrée 12 pourrait être située sur la face interne Fi ou encore sur la face externe Fe et par exemple comprendre une au plusieurs surfaces de renvoi de la lumière vers intérieur de l'écran de diffusion.

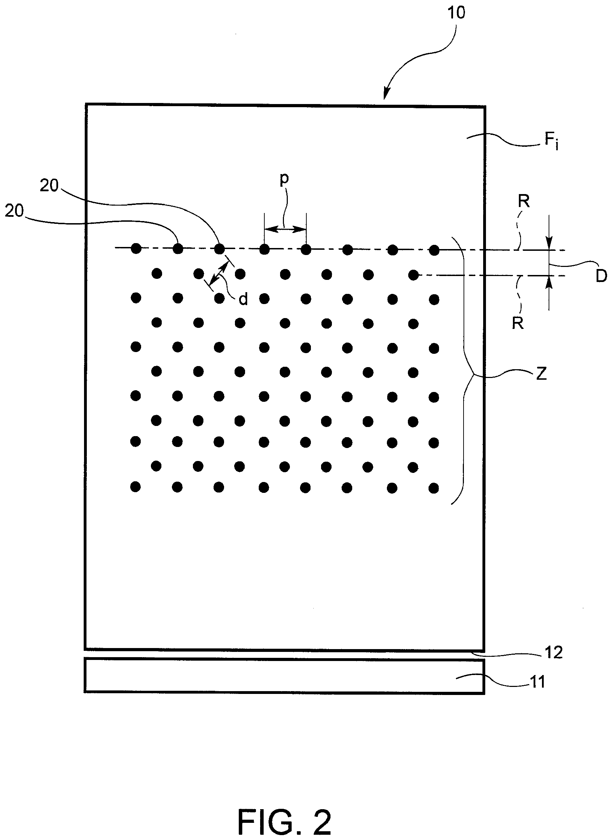

Afin de permettre, la diffusion de la lumière 15 issue de la source latérale 11 en direction de l'extérieur E au niveau d'une zone de diffusion Z, la face interne Fi de l'écran 10 comprend des cavités coniques 20 qui sont réparties ou distribuées dans la zone de diffusion Z comme le montre la figure 2. Il doit être remarqué que selon l'exemple illustré, la zone de diffusion Z forme un pavé sensiblement rectangulaire qui n'occupe qu'une partie de la face interne Fi de l'écran 10. Toutefois, selon l'invention, la zone de diffusion Z pourrait occuper toute la surface de la face interne Fi ou encore des parties disjointes de cette dernière. À cet égard, la zone de diffusion Z peut former un motif géométrique ou autre.

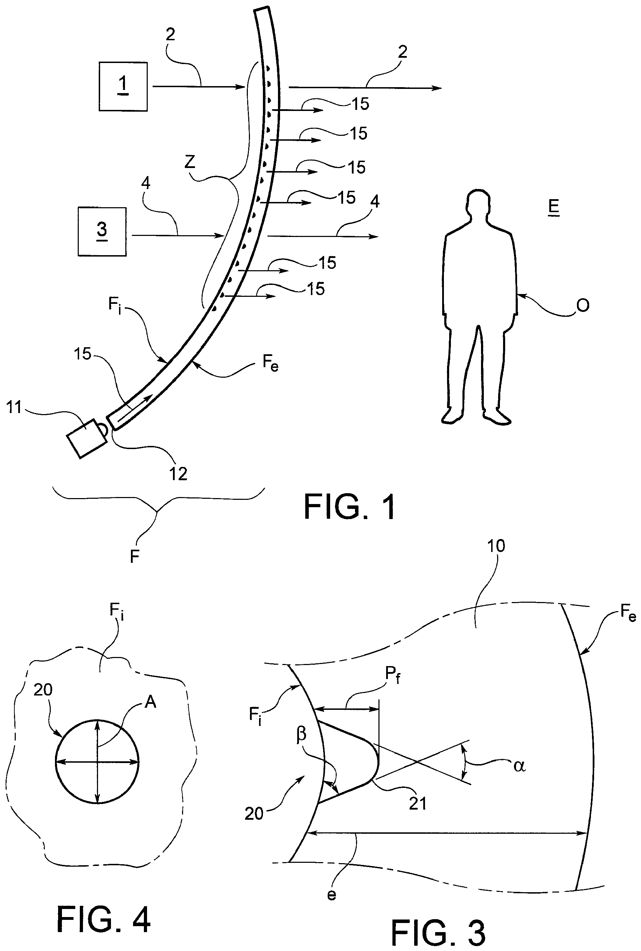

Chaque cavité 20 débouche au niveau de la face interne Fi de l'écran 10 et présente une forme en partie au moins conique de sorte que sa paroi périphérique converge vers son fond 21 en direction de la face externe Fe, comme cela ressort de la figure 3. Chaque cavité 20 possède une profondeur Pf très inférieure à l'épaisseur e de l'écran 10 qui est de préférence comprise entre 2 mm et 8 mm. La profondeur Pf des cavités est de préférence comprise entre 0,05 mm et 0,08 mm. La partie conique des cavités 20 possède un angle au sommet α inférieur ou égal à 90° et, de préférence, compris entre 40° et 90°. Afin de permettre un bon démoulage de l'écran lors de sa fabrication par injection moulage, le plus petit angle β entre la paroi conique d'une cavité 20 et la surface adjacente de la face interne est compris entre 2° et 4°.

Par ailleurs, les dimensions des cavités sont choisies de manière que ces dernières ne soient pas visibles par un observateur O, ayant une acuité visuelle de 10/10, lorsqu'il est situé à une distance supérieure ou égale à 50 cm. De manière préférée et comme le montre la figure 4, la base de chaque cavité 20 au niveau de la face interne Fi possède une forme elliptique, au sens général incluant la forme circulaire, avec un grand axe A dont la longueur mesurée au niveau de la face interne Fi est inférieure ou égale à 0,12 mm et, de préférence, compris entre 0,03 mm et 0,12 mm ou entre 0,03 mm et 0,1 mm ou entre 0,03 et 0,08 mm.

De manière plus particulièrement préférée, les cavités 20 présentent toutes sensiblement les mêmes dimensions et sont réparties sur toute la zone de diffusion de manière que la distance minimale d entre deux cavités 20 est supérieure ou égale à 0,18 mm et de préférence comprise entre 0,2 mm et 0,8 mm. La distribution des cavités 20 est en outre choisie dans le cas présent pour que le rapport entre la somme des surfaces des bases des cavités coniques et la surface totale de la zone de diffusion est inférieure ou égal à 0,21 et, de préférence, comprise entre 0,03 et 0,21. Cette distribution permet d'obtenir une transparence de la zone de diffusion comprise entre 79% et 97%.

Selon la forme de réalisation illustrée, les cavités 20 sont disposées en rangées R parallèles étant entendu que les rangées suivent des lignes ou des courbes parallèles entre elles qui ne sont pas nécessairement droites, mais peuvent notamment correspondre à des géodésiques de la face interne Fi. Les cavités 20 sont de préférence décalées d'une rangée à l'autre de manière à présenter une disposition ou distribution en quinconce. De manière préférée, les cavités d'une même rangée sont équidistantes de sorte que le pas p entre deux cavités 20 voisines d'une même rangée R est compris entre 0,2 mm et 0,8 mm. Par ailleurs, selon l'exemple illustré figure 2, la distance D entre deux rangées R voisines est comprise entre 0,14 mm et 0,57 mm.

Selon l'exemple illustré, la distance D entre deux rangées voisines diminue au fur et à mesure que les rangées sont éloignées de la zone latérale 12 d'entrée de la lumière ce qui permet d'obtenir une illumination uniforme de la zone de diffusion Z.

Selon une variante de l'invention, afin de mieux compenser l'éloignement des différentes parties de la zone de diffusion par rapport à la source latérale 11 le pas p entre deux cavités voisines d'une même rangée diminue au fur et à mesure que les rangées R sont éloignées de la zone latérale 12 d'entrée de la lumière tandis que distance D entre deux rangées voisines diminue au fur et à mesure que les rangées sont éloignées de la zone latérale 12 d'entrée de la lumière. Ainsi, la densité surfacique des cavités augmente au fur et à mesure de l'éloignement de la zone latérale d'entrée de la lumière. Ainsi dans le cadre de l'invention, la densité surfacique des cavités dans la zone de diffusion varie entre 200 cavités par cm² et 2500 cavités par cm². Il doit être souligné que, de manière surprenante, même dans le cas d'une densité surfacique de 2500 cavités par cm² ces dernières ne sont pas visibles et la zone de diffusion semble parfaitement transparente lorsqu'elle est observée selon une direction sensiblement normale à la surface externe de l'écran de diffusion dans ladite zone de diffusion.

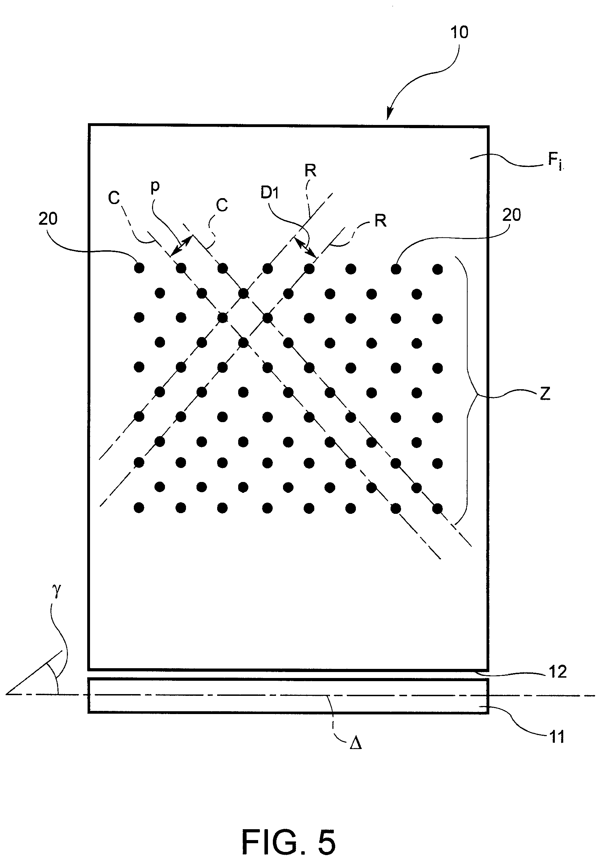

Selon l'exemple décrit en relation avec la figure 2, les cavités sont disposées en quinconces dans la zone de diffusion. Toutefois, une telle disposition n'est pas nécessaire à la réalisation d'une zone de diffusion conforme à l'invention ainsi la figure 5 illustre une autre disposition des cavités dans la zone de diffusion Z. Selon cette autre disposition, les cavités sont disposées selon des rangées R et des colonnes C à angle droit. La direction des colonnes ou des rangées faisant un angle y compris entre 40° et 50° et, de préférence, de l'ordre de 45° avec une direction d'extension Δ de la zone latérale d'entrée de la lumière 12. La distance ou le pas entre deux cavités voisines d'une même rangée qui correspond à la distance entre deux colonnes C voisines est alors compris entre 0,2 mm et 0,8 mm tandis que la distance D1 entre deux rangées voisines est aussi comprise entre 0,2 mm et 0,8 mm. Le pas P et la distance D1 peuvent alors diminuer au fur et à mesure de l'éloignement de la zone d'entrée 12. Afin de faciliter la réalisation de la zone de diffusion, il peut être choisi de garder la valeur du pas P constante tandis que la distance D1 diminue au fur et à mesure de l'éloignement de la zone d'entrée 12, ou inversement. L'inclinaison des colonnes et rangées par rapport à la direction Δ permet alors d'obtenir une uniformité de la luminance ou de la luminosité perçue dans la zone de diffusion Z.

Selon l'exemple de réalisation décrit en relation avec les figures 1 à 4, la lame constitutive de l'écran de diffusion présente une épaisseur e constante. Toutefois, selon l'invention l'épaisseur e de l'écran de diffusion peut varier et notamment diminuer en s'éloignant de la zone d'entrée 12. Ainsi, l'épaisseur de l'écran de diffusion peut varier sur la largeur de la zone diffusion, mesurée perpendiculairement à la direction Δ d'extension de la zone latérale d'entrée, de manière linaire avec un coefficient de variation compris entre 0,75 et 0,85.

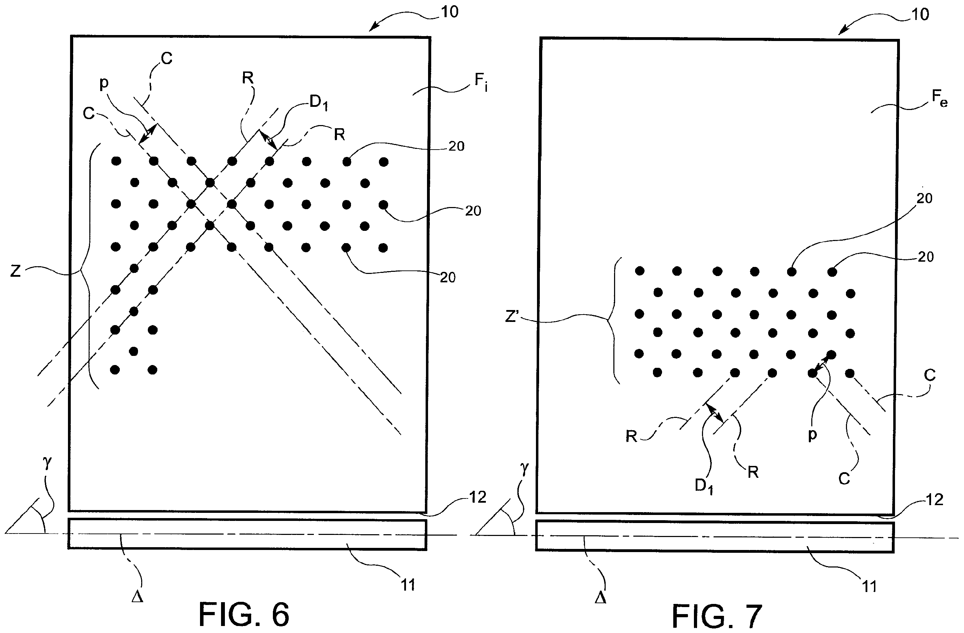

Les figures 6 et 7 illustrent une autre forme de réalisation d'un écran de diffusion selon l'invention. Dans le cadre de cette autre forme de réalisation la face interne Fi et la face externe Fe comprennent toutes les deux des zones de diffusion respectivement interne Z et externe Z' qui sont formées par des cavités coniques 20 reparties sur leur surface. Selon cet exemple, la zone de diffusion interne Z définit un motif en L tandis que la zone de diffusion externe Z définit un motif rectangulaire.

Bien entendu, d'autres variantes de réalisation un écran de diffusion ou d'un feu signalisation conforme à l'invention peuvent être envisagées dans le cadre des revendications annexées.

## Revendications

1. Ecran de diffusion transparent constitué d'une lame (10) réalisée en matériau transparent pour former un guide de lumière avec une face interne (Fi) et une face externe (Fe), opposée à la face interne (Fe), orientée vers l'extérieur pour être visible par un observateur éventuel et au moins zone latérale d'entrée (12) de la lumière qui est destinée à être placée en relation avec au moins une source de lumière latérale (11) et qui est configurée pour diriger la lumière issue de la source de lumière latérale (11) à l'intérieur ou dans l'épaisseur de la lame (10), la face interne (Fi) au moins de la lame (10) comprenant, dans une zone de diffusion (Z), des cavités (20) en partie au moins coniques qui sont réparties sur la zone de diffusion (Z) et présentent une profondeur (Pf) inférieure à l'épaisseur (e) de la lame (10) dans la zone de diffusion (Z) et, pour la partie conique, un angle au sommet (α) inférieur ou égal à 90°, l'écran de diffusion étant en outre adapté pour transmettre la lumière incidente, écran **caractérisé en ce que** la lame (10) présente une épaisseur (e) comprise entre 1 mm et 8 mm et **en ce que** la base de chaque cavité (20) conique possède une forme sensiblement elliptique avec un grand axe (A), mesuré au niveau de la face interne (Fi), possédant une longueur inférieure ou égale à 0,12 mm et, de préférence, comprise entre 0,03 mm et 0,12 mm.

2. Ecran de diffusion selon la revendication 1, **caractérisé en ce que** le taux de couverture des cavités (20) coniques dans la zone de diffusion (Z), à savoir le rapport entre la somme des surfaces des bases des cavités (20) coniques et la surface totale de la zone de diffusion (Z), est inférieur ou égal à 0,21 et de préférence compris entre 0,10 et 0,21.

3. Ecran de diffusion selon la revendication 1 ou 2, **caractérisé en ce que** la distante minimale (d) entre deux cavités (20) voisines est supérieure ou égale à 0,18 mm.

4. Ecran de diffusion selon l'une des revendications 1 à 3, **caractérisé en ce que** la distante minimale (d) entre deux cavités (20) voisines est comprise entre 0,2 mm et 0,8 mm.

5. Ecran de diffusion selon l'une des revendications 1 à 4, **caractérisé en ce que** les cavités (20) sont disposées selon les rangées (R) sensiblement parallèles.

6. Ecran de diffusion selon la revendication 5, **caractérisé en ce que** le pas (P), entre deux cavités (20) voisines d'une même rangée, est compris entre 0,2 mm et 0,8 mm.

7. Ecran de diffusion selon la revendication 5 ou 6, **caractérisé en ce que** les cavités (20) sont disposées en quinconce de manière à être décalées d'une rangée sur l'autre.

8. Ecran de diffusion selon la revendication 7, **caractérisé en ce que** la distance (D) entre deux rangées voisines est comprise entre 0,14 mm et 0,8 mm et de préférence entre 0,14 mm et 0,57 mm.

9. Ecran de diffusion selon la revendication 4 ou 5, **caractérisé en ce que** les cavités (20) sont disposées selon des rangées et des colonnes à angle droit, la direction des colonnes ou des rangées faisant un angle (γ) compris entre 40° et 50° et, de préférence, de l'ordre de 45° avec une direction d'extension (Δ) de la zone latérale d'entrée (12) de la lumière.

10. Ecran de diffusion selon l'une des revendications 5 à 9, **caractérisé en ce que** la distance (D, D1) entre deux rangées voisines (R) diminue au fur et à mesure que les rangées sont éloignées de la zone latérale d'entrée (12) de la lumière.

11. Ecran de diffusion selon l'une des revendications 1 à 10, **caractérisé en ce que** la densité surfacique des cavités (20) augmente au fur et à mesure de l'éloignement de la zone latérale d'entrée (12) de la lumière.

12. Ecran de diffusion selon l'une des revendications 1 à 11, **caractérisé en ce que** la densité surfacique des cavités (20) est comprise entre 200 cavités par cm² et 2500 cavités par cm².

13. Ecran de diffusion selon l'une des revendications 1 à 12, **caractérisé en ce que** le plus petit angle (β) entre la paroi conique d'une cavité (20) et la surface adjacente de la face interne (Fi) est compris entre 2° et 4°.

14. Feu de véhicule, notamment arrière, comprenant au moins un écran de diffusion transparent (10) selon l'une des revendications 1 à 13 et une source latérale de lumière (11) qui est associée à la zone latérale d'entrée (12) de l'écran de diffusion (10) et qui est adaptée pour émettre un faisceau lumineux dans l'épaisseur de l'écran de diffusion (10).

## Patentansprüche

1. Transparenter Diffusionsschirm, bestehend aus einer Lamelle (10), die aus einem durchsichtigen Material gefertigt ist, um einen Lichtleiter mit einer Innenseite (Fi) und einer von der Innenseite (Fi) abgewandten Außenseite (Fe), die nach außen gerichtet ist, um von einem eventuellen Beobachter gesehen zu werden, zu bilden, und wenigstens einer seitlichen Eingangszone (12) für Licht, die dazu bestimmt ist, in Bezug zu wenigstens einer seitlichen Lichtquelle (11) angeordnet zu werden, und die dazu ausgelegt ist, das von der seitlichen Lichtquelle (11) kommende Licht ins Innere oder in die Dicke der Lamelle (10) zu lenken, wobei die Innenseite (Fi) wenigstens der Lamelle (10) in einer Diffusionszone (Z) wenigstens teilweise konische Aushöhlungen (20) aufweist, die über die Diffusionszone (Z) verteilt sind und eine Tiefe (Pf), die kleiner als die Dicke (e) der Lamelle (10) in der Diffusionszone (Z) ist, und für den konischen Teil einen Spitzenwinkel (α), der kleiner als oder gleich 90° ist, aufweisen, wobei der Diffusionsschirm außerdem dazu ausgelegt ist, das einfallende Licht zu übertragen,
**dadurch gekennzeichnet, daß** die Lamelle (10) eine Dicke (e) zwischen 1 mm und 8 mm aufweist und daß die Basis jeder konischen Aushöhlung (20) eine im Wesentlichen elliptische Form mit einer an der Innenseite (Fi) gemessenen Hauptachse (A) aufweist, deren Länge kleiner als oder gleich 0,12 mm ist und vorzugsweise zwischen 0,03 mm und 0,12 mm beträgt.

2. Diffusionsschirm gemäß Anspruch 1, **dadurch gekennzeichnet, daß** der Abdeckungsgrad der konischen Aushöhlungen (20) in der Diffusionszone (Z), das heißt, das Verhältnis zwischen der Summe der Oberflächen der Basen der konischen Aushöhlungen (20) und der Gesamtfläche der Diffusionszone (Z), kleiner als oder gleich 0,21 ist und vorzugsweise zwischen 0,1 und 0,21 beträgt.

3. Diffusionsschirm gemäß Anspruch 1 oder 2, **dadurch gekennzeichnet, daß** der minimale Abstand (d) zwischen zwei benachbarten Aushöhlungen (20) größer als oder gleich 0,18 mm ist.

4. Diffusionsschirm gemäß einem der Ansprüche 1 bis 3, **dadurch gekennzeichnet, daß** der minimale Abstand (d) zwischen zwei benachbarten Aushöhlungen (20) zwischen 0,2 mm und 0,8 mm beträgt.

5. Diffusionsschirm gemäß einem der Ansprüche 1 bis 4, **dadurch gekennzeichnet, daß** die Aushöhlungen (20) in im Wesentlichen parallelen Reihen (R) angeordnet sind.

6. Diffusionsschirm gemäß Anspruch 5, **dadurch gekennzeichnet, daß** der Achsabstand (P) zwischen zwei benachbarten Aushöhlungen (20) einer selben Reihe zwischen 0,2 mm und 0,8 mm beträgt.

7. Diffusionsschirm gemäß Anspruch 5 oder 6, **dadurch gekennzeichnet, daß** die Aushöhlungen (20) in gegeneinander versetzten Reihen angeordnet sind, so daß sie von einer Reihe zur anderen versetzt sind.

8. Diffusionsschirm gemäß Anspruch 7, **dadurch gekennzeichnet, daß** der Abstand (D) zwischen zwei benachbarten Reihen zwischen 0,14 mm und 0,8 mm und vorzugsweise zwischen 0,14 mm und 0,57 mm beträgt.

9. Diffusionsschirm gemäß Anspruch 4 oder 5, **dadurch gekennzeichnet, daß** die Aushöhlungen (20) in zueinander rechtwinkligen Reihen und Spalten angeordnet sind, wobei die Richtung der Spalten oder der Reihen mit einer Erstreckungsrichtung (γ) der seitlichen Eingangszone (12) für Licht einen Winkel (Δ) bildet, der zwischen 40° und 50°, vorzugsweise etwa 45°, beträgt.

10. Diffusionsschirm gemäß einem der Ansprüche 5 bis 9, **dadurch gekennzeichnet, daß** der Abstand (D, D1) zwischen zwei benachbarten Reihen (R) in dem Maße kleiner wird, wie sich die Reihen von der seitlichen Eingangszone (12) für Licht entfernen.

11. Diffusionsschirm gemäß einem der Ansprüche 1 bis 10, **dadurch gekennzeichnet, daß** die Oberflächendichte der Aushöhlungen (20) mit der Entfernung von der seitlichen Eingangszone (12) für Licht zunimmt.

12. Diffusionsschirm gemäß einem der Ansprüche 1 bis 11, **dadurch gekennzeichnet, daß** die Oberflächendichte der Aushöhlungen (20) zwischen 200 Aushöhlungen pro cm² und 2500 Aushöhlungen pro cm² beträgt.

13. Diffusionsschirm gemäß einem der Ansprüche 1 bis 12, **dadurch gekennzeichnet, daß** der kleinste Winkel (β) zwischen der konischen Wandung einer Aushöhlung (20) und der anliegenden Oberfläche der Innenseite (Fi) zwischen 2° und 4° beträgt.

14. Fahrzeugleuchte, insbesondere hintere, mit wenigstens einem Diffusionsschirm gemäß einem der Ansprüche 1 bis 13 und einer seitlichen Lichtquelle (11), die der seitlichen Eingangszone (12) für Licht zugeordnet ist und die dazu ausgelegt ist, einen Lichtstrahl in die Dicke des Diffusionsschirms (10) zu senden.

## Claims

1. A transparent diffusion screen consisted of a sheet (10) made of a transparent material to form a light guide with an internal face (Fi) and an external face (Fe), opposite to the internal face (Fi), directed towards the outside to be visible to a potential observer and at least one lateral light-entry zone (12) that it intended to be placed in relation with at least one lateral light source (11) and that is configured to direct the light coming from the lateral light source (11) to the inside or within the thickness of the sheet (10), at least the internal face (Fi) of the sheet (10) comprising, in a diffusion zone (Z), at least partially conical cavities (20) that are distributed over the diffusion zone (Z) and that have a depth (Pf) lower than the thickness (e) of the sheet (10) in the diffusion zone (Z) and, for the conical portion, an apex angle (α) lower than or equal to 90°, the diffusion screen being further adapted to transmit the incident light, the screen being **characterized in that** the sheet (10) has a thickness (e) comprised between 1 mm and 8 mm and **in that** the base of each conical cavity (20) has a substantially elliptic shape, with a great axis (A), measured at the internal face (Fi), having a length lower than or equal to 0.12 mm and, preferably, comprised between 0.03 and 0.12 mm.

2. The diffusion screen according to claim 1, **characterized in that** the coverage rate of the conical cavities (20) in the diffusion zone (Z), i.e. the ratio between the sum of the surfaces of the bases of the conical cavities (20) and the total surface of the diffusion zone (Z), is lower than or equal to 0.21 and, preferably, comprised between 0.10 and 0.21.

3. The diffusion screen according to claim 1 or 2, **characterized in that** the minimum distance (d) between two neighbour cavities (20) is higher than or equal to 0.18 mm.

4. The diffusion screen according to one of the preceding claims, **characterized in that** the minimum distance (d) between two neighbour cavities (20) is comprised between 0.2 mm and 0.8 mm.

5. The diffusion screen according to one of the preceding claims, **characterized in that** the cavities (20) are arranged along the substantially parallel rows (R).

6. The diffusion screen according to claim 5, **characterized in that** the pitch (P), between two neighbour cavities (20) of a same row, is comprised between 0.2 mm and 0.8 mm.

7. The diffusion screen according to claim 5 or 6, **characterized in that** the cavities (20) are staggered so as to be offset relative to each other from one row to another one.

8. The diffusion screen according to claim 7, **characterized in that** the distance (D) between two neighbour rows is comprised between 0.14 mm and 0.8 mm and, preferably, between 0.14 and 0.57 mm.

9. The diffusion screen according to claim 4 or 5, **characterized in that** the cavities (20) are arranged along rows and columns at right angle, the direction of the columns or the rows forming an angle (γ) comprised between 40° and 50°, and preferably of the order of 45°, with a direction of extent (Δ) of the lateral light-entry zone (12).

10. The diffusion screen according to one of claims 5 to 9, **characterized in that** the distance (D, D1) between two neighbour rows (R) decreases as the rows go far from the lateral light-entry zone (12).

11. The diffusion screen according to one of claims 1 to 10, **characterized in that** the surface density of the cavities (20) increases as one goes far from the lateral light-entry zone (12).

12. The diffusion screen according to one of claims 1 to 11, **characterized in that** the surface density of the cavities (20) is comprised between 200 cavities per cm² and 2500 cavities per cm².

13. The diffusion screen according to one of claims 1 to 12, **characterized in that** the smallest angle (β) between the conical wall of a cavity (20) and the adjacent surface of the internal face (Fi) is comprised between 2° and 4°.

14. A vehicle lamp, in particular a rear lamp, comprising at least one transparent diffusion screen (10) according to one of claims 1 to 13 and a lateral light source (11) that is associated with the lateral entry zone (12) of the diffusion screen (10) and that is adapted to emit a light beam within the thickness of the diffusion screen (10).
